Europäisches Patentamt

(19) European Patent Office

Office européen des brevets

(11) Publication number: **0 110 511**
B1

# (12) EUROPEAN PATENT SPECIFICATION

(45) Date of publication of patent specification: **02.03.88**

(21) Application number: **83305713.6**

(22) Date of filing: **26.09.83**

(51) Int. Cl.⁴: **G 11 B 23/28,** G 11 B 5/012, G 11 B 5/02

(54) Method and apparatus for authenticating memory disk.

(30) Priority: **22.11.82 US 443766**

(43) Date of publication of application:
**13.06.84 Bulletin 84/24**

(45) Publication of the grant of the patent:
**02.03.88 Bulletin 88/09**

(84) Designated Contracting States:
**DE FR GB IT**

(56) References cited:
FR-A-2 288 369
FR-A-2 535 885
GB-A-1 525 292
GB-A-2 022 298

IBM TECHNICAL DISCLOSURE BULLETIN, vol. 21, no. 10, March 1979, pages 4259-4260, New York, US; R.E. ACOSTA et al.: "Floppy disc embossing for servo applications"

(73) Proprietor: **DYSAN CORPORATION**
**5201 Patrick Henry Drive**
**Santa Clara California (US)**

(72) Inventor: **Winkler, James Leaird**
**655 S. Fair Oaks**
**Sunnyvale California (US)**
Inventor: **Juracich, John Gerald**
**77-6F Hollenbeck Avenue**
**Sunnyvale California (US)**

(74) Representative: **Wright, Peter David John et al**
**R.G.C. Jenkins & Co. 26 Caxton Street**
**London SW1H 0RJ (GB)**

(56) References cited:

IBM TECHNICAL DISCLOSURE BULLETIN, vol. 22, no. 8A, January 1980, page 3268, New York, US; A. BRUNSCH et al.: "Magnetic record carrier with discrete tracks"

Courier Press, Leamington Spa, England.

## Description

This invention relates to the storage of information on magnetic media, and particularly to techniques for checking the authenticity of such media.

In view of GB—A—2131850, Vault Corporation and its corresponding French and German Applications FR—A—2535885 and DE—A—3319343, the applicants have submitted in respect of France, Germany and Great Britain a separate set of claims some of which have been voluntarily limited in scope compared to the set of claims submitted in respect of Italy.

In the field of data processing, thousands of computer programs have been developed and sold and this proliferation is expected to continue. Many programs are currently being marketed in the form of digital information stored on flexible or "floppy" disks. Typically, once an original program has been created and recorded on a master, copies of the program are made by recording from the master onto initially blank floppy disks, which are then sold to the trade. Due to the ease with which unauthorized or "bootleg" copies can be made from a legitimate copy of the program, many techniques have been proposed to render the production of such unauthorized copies difficult.

One such general technique on which much effort has been expended is the encryption of the program itself. The encryption technique is usually implemented by recording some secret predetermined sequence of bits of information somewhere on the disk and providing an encryption key in the computer with which a particular program will be used, so that the computer will refuse to recognize a copy of the program unless the encryption code matches the encryption key stored in the computer. In spite of numerous clever encryption codes employed, the encryption technique in general has not been an effective deterrent to the production of bootleg copies since clever programmers seem capable of breaking the code. In addition, the encryption technique suffers from the disadvantage that it is not universally applicable to all computers, particularly computers in which the controller for the disk drive on which the flexible disk is operated is a portion of the drive itself and not a portion of the software.

The invention seeks to provide a method and apparatus for enabling the authentication of a magnetic storage device such as a disk which is universally applicable to all computer systems, is relatively simple to implement and exceedingly diffucult to defeat.

According to one aspect of the present invention, there is provided a method for enabling authentication of a magnetic storage device, said method comprising the steps of:

(a) providing a magnetic storage device having a recording region; and characterized by:

(b) modifying a predetermined portion of said region so as to remove the recording property, while leaving the recording property of the remainder of said region substantially unaffected.

According to another aspect, there is provided a method for enabling authentication of a magnetic storage device, said method comprising the steps of:

(a) providing a magnetic storage device having a recording surface, and characterized by:

(b) removing a predetermined portion of said recording surface while leaving the recording property of the remainder of said recording surface substantially unaffected.

According to yet another aspect, there is provided a method for detecting an unauthorized copy of a magnetic storage device having a recording surface, said method being characterized by the steps of:

(a) positioning a read-write transducer over a predetermined normally defective portion of said recording surface

(b) operating said transducer in a write mode to attempt to record information on said predetermined portion;

(c) operating said transducer in a read mode to read any information recorded on said predetermined portion; and

(d) determining whether steps (b) and (c) resulted in the successful recording of said information on said predetermined portion to indicate that the magnetic storage device is an unauthorized copy.

An embodiment of the method of the invention comprises the deliberate destruction, during manufacture, of a predetermined portion of the recording surface of a disk so that the disk can be automatically checked by the computer for authenticity as an initial step in the use of the program. For disk media, the predetermined portion of the recording surface which is deliberately destroyed is preferably part of one or more sectors of one or more tracks on the disk. Destruction of the predetermined portions of the recording surface is accomplished in one of several alternate ways: mechanical abrading using a pointed stylus, burning off using a laser beam, embossing the predetermined portions and then mechanically abrading the embossed portion, or chemically etching the predetermined portions. When making the legitimate copy of the program, the locations of the removed portions (i.e. track and sector numbers) are recorded as part of the computer program. The recording characteristics of the remainder of the recording surface remain substantially unaffected by the removal process.

Also recorded as part of the program is an initial routine for checking the recording integrity of those predetermined portions which have been altered.

When a legitimate copy of the program is inserted into a drive for use with the associated computer, the initial part of the program requires the computer system to operate the disk drive in such a manner as to position the read/write transducer over the one or more locations where the predetermined portions of the recording surface have been removed. Next, an attempt is made to write data onto each location and to read data back from such location. For a legitimate copy of the program, it will be impossible to perform a successful write and read operation from any one of these locations, since the magnetic recording layer was removed when the copy was prepared. For bootleg copies, however, a successful write/read operation will be performed. Accordingly, if a successful write/read operation is detected, the program recorded on the disk requires that the computer abort any further operation with that disk. In addition, if desired the program may instruct the computer to erase the information recorded on the entire disk surface.

In order to avoid the inadvertent abort of operations with a legitimate copy due to the reading of random noise, a special pattern of random data blocks is used during the write/read attempt on each removed portion, and any data read from such portions is matched against this random data block. In the event of a match, the copy is illegitimate and the abort procedure is followed.

According to a further aspect of the invention, there is provided an apparatus for modifying the recording surface of a magnetic storage device, said apparatus being characterized by:

means for translating a portion of said recording surface past a work station, and means at said work station for removing said portion of said recording surface while leaving substantially unaffected the recording properties of the remainder of said recording surface.

A preferred embodiment of apparatus of the further aspect of the invention for use with flexible disks includes a stylus member mounted on a translatable disk drive arm immediately adjacent one surface of the disk, when mounted on a centrally located drive spindle, and a mechanical biasing mechanism reciprocally mounted adjacent the reverse surface of the disk for biasing the disk from the reverse side against the tip of the stylus, when actuated. Preferably, the biasing mechanism includes a bearing wheel rotatably mounted on the yoke end of a solenoid actuated rod, and a spring member for normally biasing the bearing wheel away from the reverse surface of the disk.

For a fuller understanding of the nature and advantages of the invention, reference should be had to the ensuing detailed description taken in conjunction with the accompanying drawings.

Brief description of the drawings

Fig. 1 is a schematic side view illustrating a preferred embodiment of the apparatus;

Fig. 2 is a front perspective view, partially broken away, of the apparatus of Fig. 1;

Fig. 3 is an enlarged elevational view, partially in section, showing the stylus and stylus housing;

Fig. 4 is an enlarged sectional schematic view illustrating operation of the apparatus of Fig. 1; and

Fig. 5 is a flow chart showing the authentication routine.

Description of the preferred embodiments

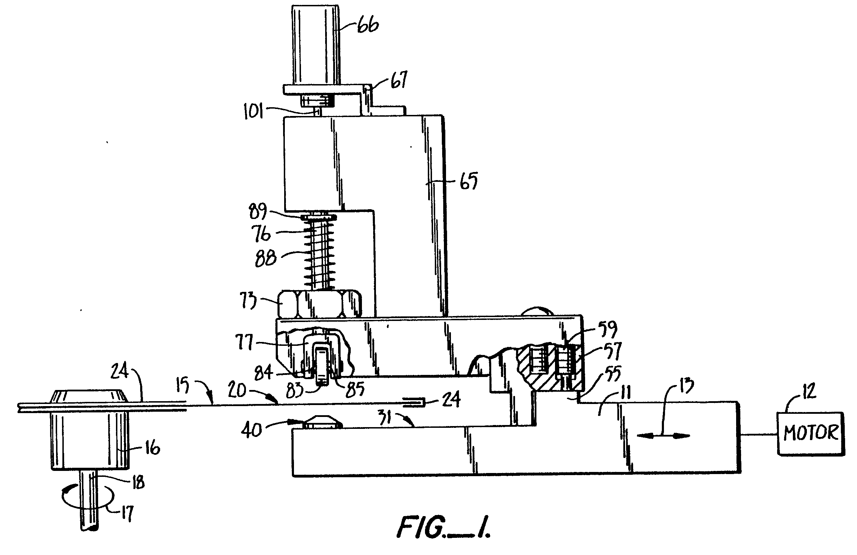

Turning now to the drawings, Figs. 1—4 illustrate a preferred embodiment of the apparatus for preparing the disk recording surface, and which is specifically designed for use with flexible disks. As is well known to those skilled in the art, flexible disks comprise a substrate of a durable resilient material, such as Mylar material, on one or both surfaces of which a magnetic recording layer is adhered. The thickness of the Mylar substrate is typically in the range from three to ten mils., while the thickness of the recording layer is typically in the range from one hundred to five hundred microinches. Such disks are designed to record bits of information in concentric circular tracks which are typically recorded with a width in the range from six to twelve mils., the spacing between adjacent tracks being on the oder of one-half the track width. The disk *per se* is encased in a protective jacket in such a manner that the disk can be rotated inside the jacket when the disk is received on the hub of a rotatable spindle mounted in the disk drive.

As shown in Fig. 1, the apparatus includes an arm 11 driven by a motor 12 in opposite radial directions (designated by arrow 13) with respect to a flexible disk 15 mounted on a hub 16. The hub 16 is arranged to be rotated in the direction indicated by arrow 17 by means of a shaft 18 driven by a second motor (not shown). The flexible disk 15 includes the compound substrate/recording layers generally designated by reference numeral 20, and a jacket 24 shown partially broken away. Motor 12 may comprise any one of a number of known drive motors used to translate flexible disk drive transducer arms radially of the disk.

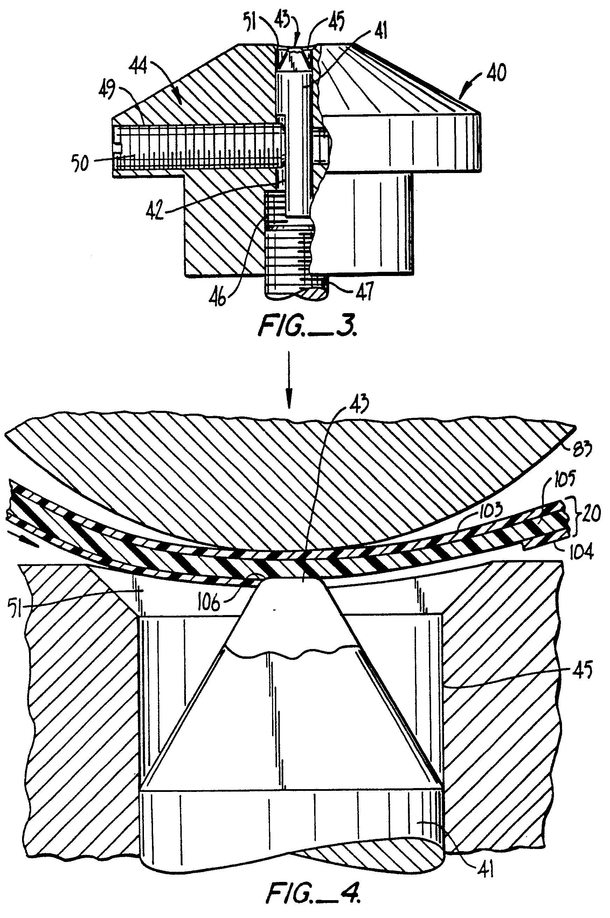

Arm 11 is a modified version of a standard flexible disk drive transducer arm and includes a bottom reference surface 31 on which a stylus assembly 40 is secured, e.g. by bonding with an epoxy adhesive. With reference to Fig. 3, stylus assembly 40 includes a stylus member 41 having a flatted shaft portion 42 and a cutting tip 43. Stylus member 41 is mounted in a central aperture of a stylus mounting member 44, the central aperture having a narrow upper portion 45 and a threaded counter bored portion 46 in which an adjustment screw 47 is received. Stylus mounting member 44 also has a threaded lateral bore 49 in which a stop screw 50 is received for the purpose of fixing the axial position of stylus member 41. The upper surface of stylus mounting member 44 has a partially spherical recess 51 into which the cutting tip 43 of stylus 41 extends. The radius of curvature of recess 51 is preferably 0.25 inch for a diamond tipped Phonopoint stylus with a length of 0.38 inch and a diameter of 0.081 inch.

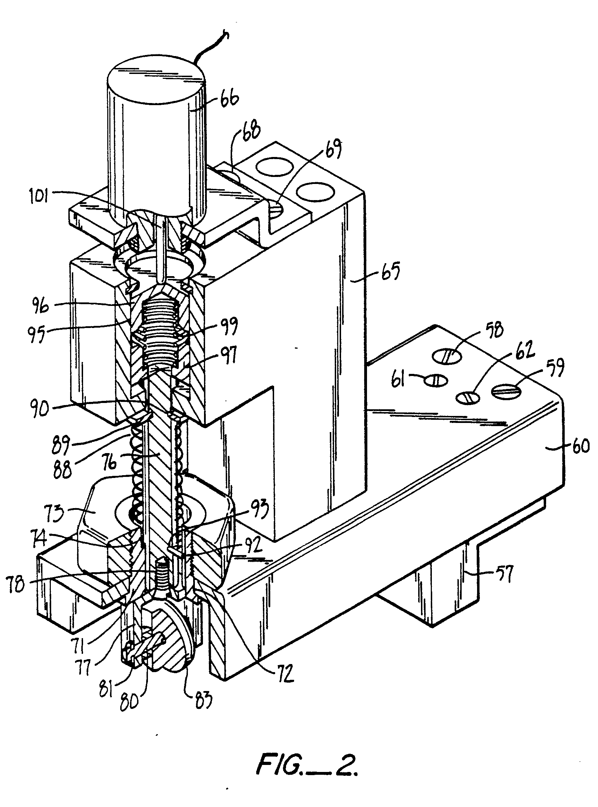

The stylus 41 is installed in the stylus mounting member 44 by inserting the stylus in to the upper central bore 45, adjusting the height of the stylus so that the cutting tip extends 0.001 inch into the recess by adjusting the adjustment screw 47, after which the stop screw 50 is adjusted to provide mating engagement with the flatted surface 42. With reference to Figs. 1 and 2, secured to a raised mounting pedestal portion 55 of lower arm 11 is a mechanical biasing mechanism which includes a lower mounting block 57 secured to pedestal 55 by means of a pair of mounting screws 58, 59, to which a u-shaped cover member 60 is secured by means of mounting screws 61, 62. Secured approximately midway of cover member 60 is an upper mounting block 65 in the shape of an inverted "L", to the upper surface of which a conventional electro-mechanical solenoid 66 is mounted by means of a mounting bracket 67 and a pair of mounting screws 68, 69. At the inner free end of cover member 60 a threaded bushing member 71 is received in an aperture 72 and secured by means of threaded nut 73. Slidably received within a central aperture 74 of bushing 71 is a shaft 76 having a bearing yoke 77 secured to the bottom thereof by means of mounting screw 78. A wheel bearing shaft 80 is carried by the bearing yoke 77 and maintained in place by a pair of conventional clips (only one 81 of which is shown—see Fig. 2). A bearing wheel 83 is rotatably received on pin 80 and is centralized by means of a pair of annular spacers 84, 85.

Shaft 76 is normally biased upwardly as viewed in Figs. 1 and 2 by means of a bias spring 88 which bears against bushing 71 and a retainer ring 89 received in a slot 90 formed in the upper periphery of shaft 76. In order to prevent rotation of shaft 76 about the longitudinal axis during translational movement, bushing 71 is provided with a keyway 92 and the lower end of shaft 76 is provided with a radially extending guide pin 93 which slides in the keyway 92.

Mounted in a bore 95 in an overhanging portion of upper mounting block 65 are a pair of cup shaped spring guides 96, 97 arranged in facing relation with a bias spring 99 located in the cup recesses to bias spring guides 96, 97 in opposite directions in bore 95. The upper end of shaft 76 bears against the lower surface of lower spring guide 97. The lower end of solenoid plunger 101 bears against the upper surface of upper spring guide 96.

In operation, when solenoid 66 is actuated by an appropriate signal, shaft 76 is biased downwardly by means of the force translated from the solenoid plunger 101 through upper spring guide 96, intermediate spring 99 and lower spring guide 97 against the restoring force provided by reverse bias spring 88. When shaft 76 is translated downwardly, wheel bearing 83 presses against the upper surface 103 of the flexible disk 20 (see Fig. 4) causing the lower recording surface 104 to press against the forward cutting edge 106 of the stylus 41. By timing the actuation of solenoid 66 in conjuction with the operation of motor 12, any preselected portion of any given track on the disk 15 can be cut away by the apparatus shown in Figs. 1—4. The depth of penetration of the cutting edge 106 of stylus 41 is limited by the vertical adjustment of stylus 41 in the recess 51 of the stylus mounting member 44, and should be such that the cutting edge 106 actually penetrates through the lower recording surface layer partially into the substrate 105. The actual amount of the extension of the cutting edge 106 above the termination of the cylinderical bore 45 depends upon the thickness of the recording layer 104 to be removed. Typically, the range of thicknesses encountered is from one hundred to five hundred microinches. The length of the amount of recording surface 104 material to be removed from a given track is a choice of the designer and typically should be several bytes in length. Since the length of a byte is dependent upon several factors, including recording density, track formatting and the like, this parameter may best be empirically selected. For a disk formatted with 256 bytes per sector, a length equal to 50 bytes, for example, may be removed which requires removal of approximately one quarter inch of the lower recording layer 104 from that particular track sector.

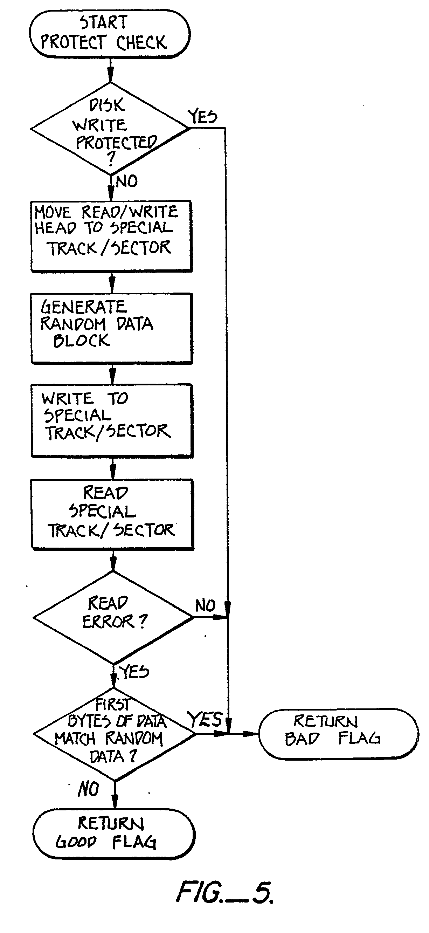

Once a disk 15 has been treated with the apparatus of Figs. 1—4 at one or more locations, these locations can then be recorded onto undisturbed portions of the same track or other tracks along with the computer program (or other data) which incorporates the initial routine illustrated in the flow chart of Fig. 5.

With reference to Fig. 5, once a disk having the program with the initial routine shown in this figure is inserted into a disk drive for use, the initial portion of the program stored on the disk 15 will cause the following sequence of events to take place. After the start step, the routine checks to determine whether the disk is write protected. If the disk is write protected, the program jumps to the return bad flag operation (since it is presumed that a legitimate copy is not write protected). Next, the computer instructs the read/write transducer arm motor to translate the transducer to the first track having a deleted recording surface portion. Once the transducer has been radially translated to that track, the write/read electronic circuitry in the disk drive is instructed to write a random data block of information to the predetermined sector of that track. Thereafter, the read/write circuitry in the disk drive is instructed to attempt a read from the same sector of that track. The data recovered as a consequence of the read error is checked to determine whether a read error was obtained. If no read error is detected, the disk is an illegitimate copy and the program steps to the return bad flag state. If a read error is obtained, then the first bytes of data are checked against the random data block which was generated prior to writing that random data block onto the predetermined sector. If a match is obtained, the program steps to the return bad flag state. If a match is not obtained, the program steps to the return good flag state, which signifies a legitimate copy is located in the disk drive.

The return bad flag state may be used in a number of ways. For example, this flag may be used to simply abort any further operation of the computer until the disk is removed from the drive. Alternatively, the return bad flag state may be used to initiate a total erase operation in which the disk drive transducer is progressively stepped across the recording surface and operated in an erase mode. The return bad flag condition may also be used to acitvate a visible display, an alarm buzzer or the like.

While the preferred embodiment of the apparatus for use with flexible disks is that illustrated in Figs. 1—4, other equivalent apparatus may be used to prepare the disk for subsequent authentication. For example, the mechanical abrading technique may be modified by providing suitable apparatus for embossing predetermined portions of predetermined tracks by arranging the flexible disk 20 on a suitable stamping dye having raised circular segments and pressing a mating dye having mating circular segmental recesses against the first dye. After embossing, the recording surface can then be burnished with a flat burnishing surface to abrade away the raised embossed recording surface layer portions. Alternatively, a laser having a suitable beam width may be operated in a manner essentially similar to the solenoid to burn off the preselected portions of preselected tracks of the recording surface. In addition, the predetermined portions may be removed chemcially using conventional photolithography techniques, e.g. providing a suitable mask having the desired removal pattern, applying a layer of photo resist material over the recording surface, installing the mask over the photo resist layer, exposing the mask to suitable radiation, etching away the appropriate underlying portions of the recording surface layer and stripping off the photo resist material.

The actual number of damaged recording surface layer portions and the location thereof may be selected by the designer in an empirical fashion. Generally speaking, the invention is most effective when several portions are removed at random locations which may vary from specific program to specific program or even between different copies of the same program. Enhanced protection for authentic copies may be obtained by recording key portions of the computer program on tracks which flank the tracks having the removed recording layer .portions and on the same track on sectors which immediately precede and follow the damaged track portion.

The timing circuitry necessary to position the recording surface removal equipment over the proper track and to operate the solenoid (or fire the laser) is conventional circuitry which forms no part of the invention. In general, the index hole provided in each flexible disk provides a circumferential starting reference pulse in conventional systems, which have suitable counting circuitry for delineating bit cell positions, byte length and sector length.

While the above provides a full and complete disclosure of the invention, various mdoifications, alternate constructions and equivalents may be employed without departing from the spirit and scope of the invention. For example, although the invention has been described with reference to flexible disks, it is equally applicable to rigid disks as well. In addition, while specific reference has been made to disks having a computer program stored thereon, the invention can be employed with disks having other pre-recorded information, such as a data base. Therefore, the above should not be construed as limiting the invention, which is defined by the appended claims.

**Claims for the Contracting State: IT**

1. A method for enabling authentication of a magnetic storage device, said method comprising the steps of:

(a) providing a magnetic storage device (15) having a recording region (104); and characterized by:

(b) modifying a predetermined portion of said region (104) so as to remove the recording property, while leaving the recording property of the remainder of said region (104) substantially unaffected.

2. A method for enabling authentication of a magnetic storage device, said method comprising the steps of:

(a) providing a magnetic storage device (15) having a recording surface (104); and cahracterized by:

(b) removing a predetermined portion of said recording surface (104) while leaving the recording property of the remainder of said recording surface (104) substantially unaffected.

3. The method of claim 2 wherein said magnetic storage device (15) comprises a disk (20) having a flexible substrate (105) on which said recording surface (104) is supported, and characterised in that said predetermined portion removed in accordance with step (b) comprises a circular segment corresponding to a portion of a data track.

4. The method of claim 2 characterized in that said step (b) of removing includes the step of mechanically abrading away said predetermined portion.

5. The method of claim 2 characterized in that said step (b) of removing includes the step of chemically dissolving said predetermined portion.

6. The method of claim 2 characterized in that said step (b) of removing includes the step of burning off said predetermined portion with a laser.

7. The method of claim 2 characterized in that said step (b) of removing includes the steps of (i) embossing said predetermined portion of said recording surface (104), and (ii) abrading away said embossed predetermined portion.

8. The method of any one of claims 2 to 7 further characterized by the step of (c) recording on said magnetic storage device (15) the location at which the predetermined portion of said recording surface was removed.

9. A method for detecting an unauthorized copy of a magnetic storage device (15) having a recording.surface (104, 105), said method being characterized by the steps of:

(a) positioning a read/write transducer over a predetermined normally defective portion of said recording surface (104, 105);

(b) operating said transducer in a write mode to attempt to record information on said predetermined portion;

(c) operating said transducer in a read mode to attempt to read any information recorded on said predetermined portion; and

(d) determining whether steps (b) and (c) resulted in the successful recording of said information on said predetermined portion to indicate that the magnetic storage device (15) is an unauthorized copy.

10. The method of claim 9 characterized in that said magnetic storage device (15) has recorded thereon the location of said normally defective predetermined portion, and wherein said step (a) of positioning is preceded by the step of reading the location information from said magnetic storage device (15).

11. The method of claim 9 or claim 10 characterized in that said information comprises a predetermined sequence of bits of information, and wherein said step (d) includes the step of comparing any information read from said predetermined portion with said predetermined sequence of bits of information.

12. An apparatus for modifying the recording surface (104) of a magnetic storage device (15), said apparatus being characterized by:

means (16, 18) for translating a portion of said recording surface (104) past a work station, and means (40) at said work station for removing said portion of said recording surface (104) while leaving substantially unaffected the recording properties of the remainder of said recording surface (104).

13. The apparatus of claim 12 characterized in that said magnetic storage device (15) is a disk (20) having a substrate (105) on which said recording surface (104) is located; wherein said translating means includes a rotatable spindle (16, 18) for supporting said disk; and wherein said removing means includes a stylus member (41) engageable with said recording surface (104) for abrading said portion therefrom.

14. The apparatus of claim 12 or claim 13 characterized in that said disk substrate (105) is flexible; wherein said stylus (41) is securely supported adjacent said recording surface (104); and wherein said removing means further includes a mechanical bias member (83) reciprocably mounted on the opposite side (103) of said recording surface from said stylus (41) for biasing said substrate (105) toward said stylus member (41) to provide abrading contact between said stylus member (41) and said portion of said recording surface (104).

15. The apparatus of any one of claims 12 to 14 characterized in that said stylus member (41) is securely mounted in a housing (44) having a central relieved portion, and wherein said stylus member terminates in a cutting tip terminating in a recessed portion (51).

**Claims for the Contracting States: DE, FR, GB**

1. A method for enabling authentication of a magnetic storage device, said method comprising the steps of:

(a) providing a magnetic storage device (15) having a recording region (104); and characterized by:

(b) modifying a predetermined portion of said region (104) so as to remove the recording property, while leaving the recording property of the remainder of said region (104) substantially unaffected.

2. A method for enabling authentication of a magnetic storage device, said method comprising the steps of:

(a) providing a magnetic storage device (15) having a recording surface (104); and characterized by:

(b) removing a predetermined portion of said recording surface (104) while leaving the recording property of the remainder of said recording surface (104) substantially unaffected.

3. The method of claim 2 wherein said magnetic storage device (15) comprises a disk (20) having a flexible substrate (105) on which said recording surface (104) is supported, and characterised in that said predetermined portion removed in accordance with step (b) comprises a circular segment corresponding to a portion of a data track.

4. The method of claim 2 characterized in that said step (b) of removing includes the step of mechanically abrading away said predetermined portion.

5. The method of claim 2 characterized in that said step (b) of removing includes the step of chemically dissolving said predetermined portion.

6. The method of claim 2 characterized in that said step (b) of removing includes the step of burning off said predetermined portion with a laser.

7. The method of claim 2 characterized in that said step (b) of removing includes the steps of (i) embossing said predetermined portion of said recording surface (104), and (ii) abrading away said embossed predetermined portion.

8. The method of any one of claims 2 to 7 further characterized by the step of (c) recording on said magnetic storage device (15) the location at which the predetermined portion of said recording surface was removed.

9. A method for detecting an unauthorized copy of a magnetic storage device (15) having a recording surface, said method comprising the steps of:

(a) positioning a read/write transducer over a predtermined normally defective portion of said recording surface (104, 105)

(b) operating said transducer in a write mode to attempt to record information on said predetermined portion; and

(c) operating said transducer in a read mode to read any information recorded on said predetermined portion;

and characterised by the further steps of

(d) comparing the information from step (b) with information from step (c) to determine whether a read error occurred;

(e) if a read error occurred, comparing less than all the information from step (b) with less than all the information from step (c) to determine whether the read error was due to random noise; and

(f) rejecting the device if no error occurred in step (d) or if the read error was due to random noise.

10. The method of claim 9 characterised in that said magnetic storage device (15) has recorded thereon the location of said normally defective predetermined portion, and in that said step (a) of positioning is preceded by the step of reading the location information from said magnetic storage device (15).

11. The method of claim 9 or claim 10 characterised in that said information comprises a predetermined sequence of bits of information.

12. An apparatus for modifying the recording surface (104) of a magnetic storage device (15), said apparatus being characterized by:

means (16, 18) for translating a portion of said recording surface (104) past a work station, and means (40) at said work station for removing said portion of said recording surface (104) during motion of said portion through said work station while leaving substantially unaffected the recording properties of the remainder of said recording surface (104).

13. The apparatus of claim 12 characterised in that said magnetic storage device (15) is a disk (20) having a substrate (105) on which said recording surface (104) is located; in that said translating means includes a rotatable spindle (16, 18) for supporting said disk; and in that said removing means includes a stylus member (41) engageable with said recording surface (104) for abrading said portion therefrom as said disk is rotated by said spindle.

14. The apparatus of claim 12 or claim 13 characterised in that said disk substrate (105) is flexible; in that said stylus (41) is securely supported adjacent said recording surface (104); and in that said removing means further includes a mechanical bias member (83) reciprocably mounted on the opposite side (103) of said recording surface from said stylus (41) for biasing said substrate (105) toward said stylus member (41) to provide abrading contact between said stylus member (41) and said portion of said recording surface (104) during motion of said disk.

15. The apparatus of any one of claims 12 to 14 characterised in that said stylus member (41) is securely mounted in a housing (44) having a central relieved portion, and wherein said stylus member terminates in a cutting tip terminating in a recessed portion (51).

**Patentansprüche für den Vertragsstaaten: IT**

1. Verfahren zur Freigabe der Berechtigung einer Magnetspeichervorrichtung, bei dem
a) eine Magnetspeichervorrichtung (15) mit einer Aufzeichnungszone (104) bereitgestellt wird, dadurch gekennzeichnet, daß
b) ein vorbestimmter Teil der Zone (104) so verändert wird, daß die Aufzeichnungsfähigkeit aufgehoben ist, während die Aufzeichnungsfähigkeit der restlichen Zone (104) im wesentlichen unverändert belassen wird.

2. Verfahren zur Freigabe der Berechtigung einer Magnetspeichervorrichtung, bei dem
a) eine Magnetspeichervorrichtung (15) mit einer Aufzeichnungsfläche (104) bereitgestellt wird, dadurch gekennzeichnet, daß
b) ein vorbestimmter Teil der Aufzeichnungsfläche (104) entfernt wird, während die Aufzeichnungsfähigkeit der restlichen Aufzeichnungsfläche (104) im wesentlichen unverändert belassen wird.

3. Verfahren nach Anspruch 2, bei dem die Magnetspeichervorrichtung (15) aus einer Platte (20) mit einem flexiblen Substrat (105) besteht, auf dem die Aufzeichnungsfläche (104) aufliegt, dadurch gekennzeichnet, daß der bei dem Schritt b) entfernte vorbestimmte Teil ein Kreissegment enthält, das einem Teil einer Datenspur entspricht.

4. Verfahren nach Anspruch 2, daß der Schritt b) für das Entfernen einen Schritt einschließt, bei dem der vorbestimmte Teil mechanisch weggeschabt wird.

5. Verfahren nach Anspruch 2, dadurch gekennzeichnet, daß der Schritt b) für das Entfernen einen Schritt einschließt, bei dem der vorbestimmte Teil chemisch aufgelöst wird.

6. Verfahren nach Anspruch 2, dadurch gekennzeichnet, daß der Schritt b) für das Entfernen einen Schritt einschließt, bei dem der vorbestimmte Teil mit einem Laser Weggebrannt wird.

7. Verfahren nach Anspruch 2, dadurch gekennzeichnet, daß der Schritt b) für das Entfernen Schritte einschließt, bei denen i) der vorbestimmte Teil der Aufzeichnungsfläche (104) erhaben herausgearbeitet wird und ii) der erhabene vorbestimmte Teil weggeschabt wird.

8. Verfahren nach einem der Ansprüche 2 bis 7, dadurch genennzeichnet, daß bei einem Schritt c) auf der Magnetspeichervorrichtung (15) die Stelle aufgezeichnet wird, an der der vorbestimmte Teil der Aufzeichnungsfläche entfernt wurde.

9. Verfahren zum Ermitteln einer unerlaubten Kopie einer Magnetspeichervorrichtung (15) mit einem Aufzeichnungsfläche, gekennzeichnet durch Schritte für
a) das Einstellen eines Lese/Schreib-Wandlers über einen vorbestimmten, normalerweise unbrauchbaren Teil der Aufzeichnungsfläche (104, 105),

b) das Betreiben des Wandlers in der Betriebsart "Schreiben" für den Versuch, an dem vorbestimmten Teil Informationen aufzuzeichnen,

c) das Betreiben des Wandlers in der Betriebsart "Lesen" zum Lesen irgendwelcher an dem vorbestimmten Teil aufgezeichneter Informationen und

d) das Ermitteln, ob die Schritte b) und c) die erfolgreiche Aufzeichnung der Informationen ergeben haben, um damit auzuzeigen, daß die Magnetspeichervorrichtung (15) eine unerlaubte Kopie ist.

10. Verfahren nach Anspruch 9, dadurch gekennzeichnet, daß auf der Magnetspeichervorrichtung (15) die Lage des normalerweise unbrauchbaren vorbestimmten Teils aufgezeichnet wurde und dem Schritt a) für das Einstellen ein Schritt zum Lesen der Lageinformation aus der Magnetspeichervorrichtung (15) vorangeht.

11. Verfahren nach Anspruch 9 oder 10, dadurch gekennzeichnet, daß die Informationen eine vorbestimmte Folge von Informationsbits enthalten, und der Schritt d) einen Schritt für das Vergleichen irgendwelcher aus dem vorbestimmten Teil ausgelesener Informationen mit der vorbestimmten Folge von Informationsbits umfaßt.

12. Anordnung zum Verändern der Aufzeichnungsfläche (104) einer Mangetspeichervorrichtung (15), gekennzeichnet durch eine Vorrichtung (16, 18), mit der ein Teil der Aufzeichnungsfläche (104) an einer Arbeitsstation vorbei verschiebbar ist, und eine Vorrichtung (40) an der Arbeitsstation zum Abtragen des Teils der Aufzeichnungsfläche (104), während die Aufzeichnungseigenschaften der restlichen Aufzeichnungsfläche (104) im wesentlichen unverändert belassen werden.

13. Anordnung nach Anspruch 12, dadurch gekennzeichnet, daß die Magnetspeichervorrichtung (15) eine Platte (20) mit einem Substrat (105) ist, auf dem die Aufzeichnungsfläche (104) angebracht ist, die Verschiebevorrichtung eine drehbare Spindel (16, 18) für das Tragen der Platte hat und die Abtragevorrichtung ein an die Aufzeichnungsfläche (104) ansetzbares Stichelement (41) für das Abtragen des Teils von der Aufzeichnungsfläche aufweist.

14. Anordnung nach Anspruch 12 oder 13, dadurch gekennzeichnet, daß das Plattensubstrat (105) flexibel ist, der Stichel (41) fest nahe der Aufzeichnungsfläche (104) gelagert ist und die Abtragevorrichtung ferner ein an der dem Stichel (41) gegenüberliegenden Seite (103) der Aufzeichnungsfläche hin- und herbewegbar angebrachtes mechanisches Vorspannelement (83) für das Vorspannen des Substrats (105) zu dem Stichelement (41) hin aufweist, um eine Abschabeberührung zwischen dem Stichelement (41) und dem Teil der Aufzeichnungsfläche (104) hervorzurufen.

15. Anordnung nach einem der Ansprüche 12 bis 14, dadurch gekennzeichnet, daß das Stichelement (41) fest in einem Gehäuse (44) mit einem mittigen ausgenommenen Teilbereich angebracht ist und das Stichelement in einer Schneidspitze endet, welche in einem Ausnehmungsabschnitt (51) endet.

**Patentansprüche für die Vertragsstaaten: DE, FR, GB**

1. Verfahren zur Freigable der Berechtigung einer Magnetspeichervorrichtung, bei dem

a) eine Magnetspeichervorrichtung (15) mit einer Aufzeichnungszone (104) bereitgestellt wird, dadurch gekennzeichnet, daß

b) ein vorbestimmter Teil der Zone (104) so verändert wird, daß die Aufzeichnungsfähigkeit aufgehoben ist, während die Aufzeichnungsfähigkeit der restlichen Zone (104) im wesentlichen unverändert belassen wird.

2. Verfahren Zur Freigabe der Berechtigung einer Magnetspeichervorrichtung, bei dem

a) eine Magnetspeichervorrichtung (15) mit einer Aufzeichnungsfläche (104) bereitgestellt wird, dadurch gekennzeichnet, daß

b) ein vorbestimmter Teil der Aufzeichnungsfläche (104) entfernt wird, während die Aufzeichnungsfähigkeit der restlichen Aufzeichnungsfläche (104) im wesentlichen unverändert belassen wird.

3. Verfahren nach Anspruch 2, bei dem die Magnetspeichervorrichtung (15) aus einer Platte (20) mit einem flexiblen Substrat (105) besteht, auf dem die Aufzeichnungsfläche (104) aufliegt, dadurch gekennzeichnet, daß der bei dem Schritt b) entfernte vorbestimmte Teil ein Kreissegment enthält, das einem Teil einer Datenspur entspricht.

4. Verfahren nach Anspruch 2, daß der Schritt b) für das Entfernen einen Schritt einschließt, bei dem der vorbestimmte Teil mechanisch weggeschabt wird.

5. Verfahren nach Anspruch 2, dadurch gekennzeichnet, daß der Schritt b) für das Entfernen einen Schritt einschließt, bei dem der vorbestimmte Teil chemisch aufgelöst wird.

6. Verfahren nach Anspruch 2, dadurch gekennzeichnet, daß der Schritt b) für das Entfernen einen Schritt einschließt, bei dem der vorbestimmte Teil mit einem Laser weggebrannt wird.

7. Verfahren nach Anspruch 2, dadurch gekennzeichnet, daß der Schritt b) für das Entfernen Schritte einschließt, bei denen i) der vorbestimmte Teil der Aufzeichnungsfläche (104) erhaben herausgearbeitet wird und ii) der erhabene vorbestimmte Teil weggeschabt wird.

8. Verfahren nach einem der Ansprüche 2 bis 7, dadurch gekennzeichnet, daß bei einem Schritt c) auf der Magnetspeichervorrichtung (15) die Stelle aufgezeichnet wird, an der der vorbestimmte Teil der Aufzeichnungsfläche entfernt wurde.

9. Verfahren zum Ermitteln einer unerlaubten Kopie einer Magnetspeichervorrichtung (15) mit einem Aufzeichnungsfläche, wobei das Verfahren Schritte für

a) das Einstellen eines Lese/Schreib-Wandlers über einen vorbestimmten, normalerweise unbrauchbaren Teil der Aufzeichnungsfläche (104, 105),

b) das Betreiben des Wandlers in der Betriebsart "Schreiben" für den Versuch, an dem vorbestimmten Teil Informationen aufzuzeichnen, und

c) das Betreiben des Wandlers in der Betriebsart "Lesen" zum Lesen irgendwelcher an dem vorbestimmten Teil aufgezeichneter Information umfaßt, gekennzeichnet durch weitere Schritte, bei denen

d) die Informationen aus dem Schritt b) mit den Informationen aus dem Schritt c) vergleichen werden, um zu ermittelt, ob ein Lesefehler aufgetreten ist,

e) im Falle des Auftretens eines Lesefehlers weniger als alle Informationen aus dem Schritt b) mit weniger als allen Informationen aus dem Schritt c) vergleichen werden, um zu ermitteln, ob der Lesefehler auf eine zufällige Störung zurückzuführen war, und

f) die Vorrichtung zurückgewiesen wird, falls bei dem Schritt d) kein Fehler aufgetreten ist oder falls der Lesefehler auf die zufällige Störung zurückzuführen war.

10. Verfahren nach Anspruch 9, dadurch gekennzeichnet, daß auf der Magnetspeichervorrichtung (15) die Lage des normalerweise unbrauchbaren vorbestimmten Teils aufgezeichnet wurde und daß dem Schritt a) für das Einstellen ein Schritt zum Lesen der Lageinformation aus der Magnetspeichervorrichtung (15) vorangeht.

11. Verfahren nach Anspruch 9 oder 10, dadurch gekennzeichnet, daß die Informationen eine vorbestimmte Folge von Informationsbits enthalten.

12. Anordnung zum Verändern der Aufzeichnungsfläche (104) einer Magnetspeichrvorrichtung (15), gekennzeichnet durch eine Vorrichtung (16, 18), mit der ein Teil der Aufzeichnungsfläche (104) an einer Arbeitsstation vorbei verschiebbar ist, und eine Vorrichtung (40) an der Arbeitsstation, mit der während der Bewegung des Teils durch die Arbeitsstation hindurch der Teil der Aufzeichnungsfläche (104) abtragbar ist, während die Aufzeichnungseigenschaften der restlichen Aufzeichnungsfläche (104) im wesentlichen unverändert bleiben.

13. Anordnung nach Anspruch 12, dadurch gekennzeichnet, daß die Magnetspeichervorrichtung (15) eine Platte (20) mit einem Substrat (105) ist, auf dem die Aufzeichnungsfläche (104) angebracht ist, daß die Verschiebevorrichtung eine drehbare Spindel (16, 18) für das Tragen der Platte hat und daß die Abtragevorrichtung ein an die Aufzeichnungsfläche (104) ansetzbares Stichelement für das Abtragen des Teils von der Aufzeichnungsfläche während der Drehung der Platte mittels der Spindel aufweist.

14. Anordnung nach Anspruch 12 oder 13, dadurch gekennzeichent, daß das Plattensubstrat (105) flexibel ist, daß der Stichel (41) fest nache der Aufzeichnungsfläche (104) gelagert ist und daß die Abtragevorrichtung ferner ein an der dem Stichel (41) gegenüberliegenden Seite (103) der Aufzeichnungsfläche hin- und herbewegbar angebrachtes mechanisches Vorspannelement (83) für das Vorspannen des Substrats (105) zu dem Stichelement (41) hin aufweist, um während der Bewegung der Platte eine Abschabeberührung zwischen dem Stichelelement (41) und dem Teil der Aufzeichnungsfläche (104) hervorzurufen.

15. Anordnung nach einem der Ansprüche 12 bis 14, dadurch gekennzeichnet, daß das Stichelelement (41) fest in einem Gehäuse (44) mit einem mittigen ausgenommenen Teilbereich angebracht ist und das Stichelelement in einer Schneidspitze endet, welche in einem Ausnehmungsabschnitt (51) endet.

**Revendications pour l'Etat Contractant: IT**

1. Procédé permettant d'authentifier un dispositif de stockage magnétique, ce precédé consistant à:

a) prévoir un dispositif (15) de stockage magnétique comprenant une région d'enregistrement (104), et étant caractérisé par:

b) l'étape consistant à modifier une partie prédéterminée de ladite région (104) pour en supprimer la capacité d'enregistrement, tout en laissant sensiblement inchangée la capacité d'enregistrement du reste de ladite région (104).

2. Procédé permettant d'authentifier un dispositif de stockage magnétique, ce procédé consistant à:

a) prévoir un dispositif (15) de stockage magnétique comprenant une surface d'enregistrement (104), et étant caractérisé par:

b) l'opération consistant à retirer une partie prédéterminée de ladite surface d'enregistrement (104) tout en laissant sensiblement inchangée la capacité d'enregistrement du reste de la surface d'enregistrement (104).

3. Procédé selon la revendication 2, dans lequel le dispositif de stockage magnétique (15) comprend un disque (20) à support souple (105) sur lequel est portée ladite surface d'enregistrement (104), caractérisé en ce que ladite partie prédéterminée retirée selon l'opération (b) comprend un segment circulaire correspondant à une partie d'une piste de données.

4. Procédé selon la revendication 2, caractérisé en ce que l'opération (b) de retrait comprend une opération d'abrasion mécanique de ladite partie prédéterminée.

5. Procédé selon la revendication 2, caractérisé en ce que l'opération (b) de retrait comprend une étape de dissolution chimique de ladite partie prédéterminée.

6. Procédé selon la revendication 2, caractérisé en ce que l'opération de retrait (b) comprend une étape de brûlage de ladite partie prédéterminée avec un laser.

7. Procédé selon la revendication 2, caractérisé en ce que l'opération de retrait (b) comprend des étapes (i) d'estampage de ladite portion prédéterminée de la surface d'enregistrement (104) et (ii) d'abrasion de ladite partie prédéterminée estampée.

8. Procédé selon l'une des revendications 2 à 7, caractérisé par une étape (c) d'enregistrement sur le dispositif (15) de stockage magnétique à l'emplacement où la partie prédéterminée de la surface d'enregistrement a été retirée.

9. Procédé de détection d'une copie non autorisée d'un dispositif (15) de stockage magnétique comprenant une surface d'enregistrement (104, 105), caractérisé par les opérations consistant à:

a) positionner un transducteur de lecture/écriture sur une partie prédéterminée normalement défectueuse de la surface d'enregistrement (104, 105);

b) faire fonctionner le transducteur dans un mode écriture pour essayer d'enregistrer une information sur ladite partie prédéterminée;

c) faire fonctionner le transducteur dans un mode lecture pour essayer de lire une information quelconque enregistrée sur ladite partie prédéterminée; et

d) déterminer si les opérations (b) et (c) se sont traduites par un enregistrement correct de ladite information sur ladite partie prédéterminée pour indiquer que le dispositif de stockage magnétique (15) est une copie non autorisée.

10. Procédé selon la revendication 9, caractérisé en ce que le dispositif de stockage magnétique (15) comprend l'enregistrement de l'emplacement de ladite partie prédéterminée normalement défectueuse, et en ce que l'opération (a) de positionnement est précédée par l'opération de lecture de l'information d'emplacement sur le dispositif de stockage magnétique (15).

11. Procédé selon la revendication 9 ou 10, caractérisé en ce que ladite information comprend und séquence prédéterminée de bits d'information, et en ce que l'opération (d) comprend une étape de comparaison d'une information quelconque lue sur ladite partie prédéterminé à ladite séquence prédéterminée de bits d'information.

12. Appareil pour modifier la surface d'enregistrement (104) d'un dispositif de stockage magnétique (15), cet appareil étant caractérisé par des moyens (16, 18) pour déplacer en translation une partie de ladite surface d'enregistrement (104) pour la faire passer par une station de travail, et des moyens (40) à ladite station de travail pour retirer ladite partie de ladite surface d'enregistrement (104) tout en laissant sensiblement inchangées les propriétés d'enregistrement du reste de ladite surface d'enregistrement (104).

13. Appareil selon la revendication 12, caractérisé en ce que le dispositif (15) de stockage magnétique est un disque (20) ayant un support (105) sur lequel est situé ladite surface d'enregistrement (104), en ce que les moyens de translation comprennent une axe rotatif (16, 18) de support du disque, et en ce que les moyens de retrait comprennent une aiguille (41) propre à engager ladite surface d'enregistrement (104) pour abraser la partie prédéterminée de celle-ci.

14. Appareil selon la revendication 12 ou 13, caractérisé en ce que le support de disque (105) est souple, en ce que ladite aiguille (41) est supportée fixement adjacente à ladite surface d'enregistrement (104), et en que les moyens de retrait comprennent également un élément (83) de rappel mécanique monté à mouvement alternatif sur le côté (103) de ladite surface d'enregistrement opposé à l'aiguille (41) pour pousser le support (105 vers ladite aiguille (41) et réaliser un contact abrasif entre l'aiguille (41) et ladite partie de la surface d'enregistrement (104).

15. Appareil selon l'une des revendications 12 à 14, caractéisé en ce que l'aiguille (41) est montée fixement dans un boîtier (44) comprenant une partie centrale dégagée, et en ce que l'aiguille se termine par une pointe de couple se terminant dans une partie en creux (51).

**Revendications pour les Etats Contractants: DE, FR, GB**

1. Procédé permettant d'authentifier un dispositif de stockage magétique, ce procédé consistant à:

a) prévoir un dispositif (15) de stockage mangétique comprenant une région d'enregistrement (104), et étant caractérisé par:

b) l'étape consistant à modifier une partie prédéterminée de ladite région (104) pour en supprimer la capacité d'enregistrement, tout en laissant sensiblement inchangée la capacité d'enregistrement du reste de ladite région (104).

2. Procédé permettant d'authentifier un dispositif de stockage magnétique, ce procédé consistant à:

a) prévoir un dispositif (15) de stockage magnétique comprenant une surface d'enregistrement (104), et étant caractérisé par:

b) l'opération consistant à retirer une partie prédéterminée de ladite surface d'enregistrement (104) tout en laissant sensiblement inchangée la capacité d'enregistrement du reste de la surface d'enregistrement (104).

3. Procédé selon la revendication 2, dans lequel le dispositif de stockage magnétique (15) comprend un disque (20) à support souple (105) sur lequel est portée ladite surface d'enregistrement (104), caractérisé en ce que ladite partie prédéterminée retirée selon l'opération (b) comprend un segment circulaire correspondant à une partie d'une piste de données.

4. Procédé selon la revendication 2, caractérisé en ce que l'opération (b) de retrait comprend une opération d'abrasion mécanique de ladite partie prédéterminée.

5. Procédé selon la revendication 2, caractérisé en ce que l'opération (b) de retrait comprend une étape de dissolution chimique de ladite partie prédéterminée.

6. Procédé selon la revendication 2, caractérisé en ce que l'opération de retrait (b) comprend une étape de brûlage de ladite partie prédéterminée avec un laser.

7. Procédé selon la revendication 2, caractérisé en ce que l'opération de retrait (b) comprend des étapes (i) d'estampage de ladite portion prédéterminée de la surface d'enregistrement (104) et (ii) d'abrasion de ladite partie prédéterminée estampée.

8. Procédé selon l'une des revendications 2 à 7, caractérisé par une étape (c) d'enregistrement sur le dispositif (15) de stockage magnétique à l'emplacement où la partie prédéterminée de la surface d'enregistrement a été retirée.

9. Procédé pour détecter une copie non autorisée d'un dispositif de stockage magnétique (15) comprenant une surface d'enregistrement, ce procédé comprenant les étapes consistant à:

a) positionner un transducteur de lecture/écriture sur une partie prédéterminée normalement défectueuse de ladite surface d'enregistrement (104, 105);

b) faire fonctionner le transducteur dans un mode écriture pour essayer d'enregistrer une information sur ladite partie prédéterminée; et

c) faire fonctionner le transducteur dans un mode lecture pour lire toute information enregistrée sur ladite partie prédéterminée;

caractérisé par les étapes suivantes consistant à:

d) comparer l'information de l'étape (b) avec l'information de l'étape (c) pour déterminer si une erreur de lecture a eu lieu;

e) si une erreur de lecteur a eu lieu, comparer moins que la totalité de l'information de l'étape (b) à moins de la totalité de l'information de l'étape (c) pour déterminer si l'erreur de lecture est due à un bruit aléatoire; et

f) rejeter le dispositif si aucune erreur n'a en lieu dans l'étape (d) ou si l'erreur de lecture était due à un bruit aléatoire.

10. Procédé selon la revendication 9, caractérisé en ce que le dispositif de stockage magnétique (15) comprend l'enregistrement de l'emplacement de ladite partie prédéterminée normalement défectueuse, et en ce que l'étape (a) de positionnement est précédée par l'étape de lecture de l'information d'emplacement sur le dispositif (15) de stockage magnétique.

11. Procédé selon la revendication 9 ou 10, caractérisé en ce que ladite information comprend une séquence prédéterminée de bits d'information.

12. Appareil pour modifier la structure d'enregistrement (104) d'un dispositif de stockage magnétique (15), cet appareil étant caractérisé par des moyens (16, 18) pour déplacer en translation une partie de ladite surface d'enregistrement (104) et la faire passer par une station de travail, et des moyens (40) à ladite station de travail pour retirer ladite partie de la surface d'enregistrement (104) pendant le mouvement de cette partie par la station de travail tout en laissant sensbilement inchangées les propriétés d'enregistrement du reste de la surface d'enregistrement (104).

13. Appareil selon la revendication 12, caractérisé en ce que le dispositif (15) de stockage magnétique est un disque (20) ayant un support (105) sur lequel est situé ladite surface d'enregistrement (104), en ce que les moyens de translation comprennent un arbre rotatif (16, 18) de support du disque, et en ce que les moyens de retrait comprennent une aiguille (41) propre à engager ladite surface d'enregistrement (104) pour abraser ladite partie lorsque le disque est entrainé en rotation par l'arbre.

14. Appareil selon la revendication 12 ou 13, caractérisé en ce que le support de disque (105) est flexible, en ce que l'aiguille (41) est montée fixement adjacente à la surface d'enregistrement (104), et en ce que les moyens de retrait comprennent également un élément (83) de rappel mécanique monté à mouvement alternatif sur le côté (103) de la surface d'enregistrement opposé à l'aiguille (41) pour pousser le support (105) vers l'aiguille (41) et réaliser un contact abrasif entre l'aiguille (41) ladite partie de la surface d'enregistrement (104) pendant le mouvement du disque.

15. Appareil selon l'une des revendications 12 à 14, caractérisé en ce que l'aiguille (41) est montée fixement dans un boîtier (44) ayant une partie centrale dégagée, et en ce que l'aiguille se termine par une pointe de coupe se terminant dans une partie en cavité (51).

FIG.__I.

0 110 511

*FIG.__2.*

FIG.__3.

FIG.__4.

FIG.__5.